# EUROPÄISCHE PATENTSCHRIFT

(11) **EP 2 818 599 B1**
(45) Veröffentlichungstag und Bekanntmachung des Hinweises auf die Patenterteilung: **23.11.2016**
(21) Anmeldenummer: 13173718.1
(22) Anmeldetag: 26.06.2013
(51) Int. Cl.: E03F 5/04, B29C 45/26

(54) **Einlaufgehäuse für einen Bodenablauf**
Inlet housing for a floor drain
Boîtier d'entrée pour un siphon de sol

(43) Veröffentlichungstag der Anmeldung: 31.12.2014
(73) Patentinhaber: Geberit International AG, 8645 Jona (CH)
(72) Erfinder: Schintler, Michael, 8330 Pfäffikon (CH); Mächler, Daniel, 8645 Jona (CH)
(74) Vertreter: Frischknecht, Harry Ralph

(56) Entgegenhaltungen:
- EP-A1- 2 333 171
- EP-A1- 2 405 062
- DE-A1- 2 842 489
- GB-A- 2 429 982

## Beschreibung

### TECHNISCHES GEBIET

Die vorliegende Erfindung betrifft ein Einlaufgehäuse für einen Bodenablauf einer sanitären Installation nach dem Oberbegriff von Anspruch 1.

### STAND DER TECHNIK

Aus dem Stand der Technik, insbesondere GB2429982A, sind Einlaufgehäuse für Bodenabläufe bekannt. Solche Bodenabläufe dienen der Entwässerung einer sanitären Installation, wie beispielsweise einer Dusche.

Die EP 2 333 171 zeigt einen Bodenablauf mit einem genannten Einlaufgehäuse. Das Einlaufgehäuse nach der EP 2 333 171 ist aus Kunststoff gefertigt. Das Einlaufgehäuse nach der EP 2 333 171 weist einen Innenraum mit einer Einlauföffnung und einer Ablauföffnung auf. Über die Einlassöffnung wird das Wasser dem Innenraum zugeführt, durch welchen das Wasser dann zur Auslassöffnung fliesst. Der Auslassöffnung schliesst sich ein Ablaufstutzen an, welcher typischerweise in der Vertikalen liegt und einem Rohrsystem angeschlossen ist.

Solche Einlaufgehäuse werden typischerweise zweiteilig gefertigt, wobei ein Unterteil mit dem Ablaufstutzen und ein Oberteil bereitgestellt werden. Die Trennlinie zwischen Unterteil und Oberteil verläuft im Wesentlichen in der Horizontalen, Unterteil und Oberteil werden miteinander verschweisst.

Dieses Herstellverfahren weist den Nachteil auf, dass es durch die Verschweissung von Unterteil und Oberteil sehr aufwändig ist. Zudem kann es zu undichten Stellen bei mangelhafter Verschweissung zwischen Oberteil und Unterteil kommen, was je nach Höhe der Trennlinie zu Wasserschäden im Gebrauch führen kann.

Weiter sind derartige Einlaufgehäuse schwierig herzustellen, weil die Gehäuse eine gewisse Grösse aufweisen und die Form der Einlaufgehäuse aufgrund gewünschter Funktionen, wie ein gutes hydraulisches Verhalten, häufig äusserst komplex ist.

### DARSTELLUNG DER ERFINDUNG

Ausgehend von diesem Stand der Technik liegt der Erfindung eine Aufgabe zugrunde, ein einfaches Verfahren für ein Einlaufgehäuse anzugeben, wobei das Einlaufgehäuse ein gutes hydraulisches Verhalten bezüglich des Ablaufens von Wasser aufweisen soll.

Eine solche Aufgabe löst Verfahren nach dem Anspruch 1. Ein Einlaufgehäuse hergestellt nach dem Verfahren von Anspruch 1 für einen Bodenablauf einer sanitären Installation, ist in Anspruch 3 definiert und umfasst eine Wandung, die einen Innenraum begrenzt, eine Einlassöffnung und eine Auslassöffnung, wobei das Einlaufgehäuse im Wesentlichen aus Kunststoff ist, und wobei der Innenraum durch die Einlassöffnung und die Auslassöffnung zugänglich ist und das abzuführende Wasser von der Einlassöffnung zur Auslassöffnung durch den Innenraum führbar ist. Einlassöffnung und Auslassöffnung durchdringen die Wandung. Das Einlaufgehäuse weist bezüglich des Innenraums gegenüber der Auslassöffnung eine Herstellöffnung auf, und die Auslassöffnung weist einen strömungsoptimierten Querschnitt, insbesondere einen strömungsoptimierten gerundeten

Eintrittsbereich, auf. Das Einlaufgehäuse wird durch ein Spritzgiessverfahren hergestellt, gemäss welchem mit einem ersten Kern des Spritzgiesswerkzeuges der Innenraum und die Einlassöffnung geformt wird und dass mit einem zweiten Kern, welcher den ersten Kern durchdringt, die Herstellöffnung und die Auslassöffnung geformt wird.

Durch die Herstellöffnung gegenüber der Auslassöffnung lässt sich bei der Herstellung des Einlaufgehäuses ein Werkzeug eines Spritzgusswerkzeuges zuführen, so dass der strömungsoptimierte Querschnitt geformt werden kann. Die Herstellöffnung weist also den Vorteil auf, dass eine strömungsoptimierte Auslassöffnung mit sehr einfachen Mitteln von der Seite des Innenraums herstellbar ist. Dies ist insbesondere vorteilhaft, weil die Herstellung der Auslassöffnung von der Gegenseite, also von ausserhalb des Innenraums, nur mit sehr grossem Aufwand möglich ist. Zudem wird durch die Bildung der Herstellöffnung die Bereitstellung eines Einlaufgehäuses ohne Schweissstellen erlaubt. Vorzugsweise umfasst das Einlaufgehäuse weiter einen Deckel, mit welchem die Herstellöffnung verschliessbar ist. Durch den Deckel, welcher bevorzugt als separates Teil vom Einlaufgehäuse ausgebildet ist, kann die Herstellöffnung nach der Herstellung verschlossen werden.

Vorzugsweise ist das Einlaufgehäuse einteilig ausgebildet. Das Einlaufgehäuse wird also einstückig hergestellt und nicht aus zwei oder mehreren Teilen zusammengesetzt. Wenn der besagte Deckel vorhanden ist, stellt dieser ein zusätzliches Teil zum einteiligen Einlaufgehäuse dar.

Vorzugsweise ist der Querschnitt der Herstellöffnung mindestens gleich gross, insbesondere grösser, als der maximale Querschnitt der Auslassöffnung. Hierdurch kann ein besonders guter Zugang für das Werkzeug bereitgestellt werden.

Vorzugsweise erstreckt sich die Herstellöffnung in Querrichtung zur Mittelachse der Auslassöffnung gesehen über den maximalen Querschnitt der Auslassöffnung hinaus. Die Auslassöffnung ist demnach durch die Herstellöffnung in Richtung der Mittelachsen von Herstellöffnung und Auslassöffnung vollständig zugänglich.

Die Mittelachse der Auslassöffnung verläuft vorzugsweise kollinear oder parallel versetzt zur Mittelachse der Herstellöffnung. Somit liegen also die Auslassöffnung und die Herstellöffnung bezüglich des Innenraums im Wesentlichen übereinander.

Der Auslassöffnung schliesst sich ein Auslassstutzen an, wobei der Eintrittsbereich der Auslassöffnung von der Wandung des Innenraums in den Auslassstutzen strömungsoptimiert, gerundet, ausgebildet ist. Der Auslassstutzen ist Teil des Einlaufgehäuses. Der Querschnitt der Auslassöffnung verkleinert sich mit zunehmender Entfernung zum Innenraum auf den Durchmesser des Auslassstutzens.

Der Deckel ist von ausserhalb des Innenraums in die Herstellöffnung einsetzbar. Alternativ ist der Deckel von innerhalb des Innenraums in die Herstellöffnung einsetzbar. Im letzteren Fall kann durch die Entfernung des Deckels, wenn sich das Einlaufgehäuse im eingebauten Zustand befindet, eine Revisionsöffnung geschaffen werden.

Vorzugsweise ist der Deckel und/oder die Herstellöffnung mit mindestens einem Dichtungselement versehen, welches den Spalt zwischen dem Deckel und der Herstellöffnung abdichten. Das Dichtungselement kann beliebig ausgebildet sein. Vorzugsweise weist das Dichtungselement mindestens eine Dichtungslippe auf. Das Dichtungselement kann aber auch ein O-Ring sein. Besonders bevorzugt wird das Dichtungselement am Deckel mittels eines Zweikomponenten-Spritzgussverfahren angeformt.

Vorzugsweise wird der Deckel formschlüssig und/oder kraftschlüssig, nicht aber stoffschlüssig, in der Herstellöffnung gehalten. Der Deckel ist also von Hand und zerstörungsfrei vom Einlaufgehäuse trennbar ausgebildet.

Besonders bevorzugt verfügen der Deckel und das Einlaufgehäuse über Rastmittel, über welche der Deckel am Einlaufgehäuse befestigt ist. Hierdurch kann der Deckel zum Einlaufgehäuse gesichert werden.

Die Wandung des Einlaufgehäuses wird vorzugsweise durch eine Bodenwand, durch Seitenwände und durch eine Deckenwand bereitgestellt, wobei die Bodenwand und die Deckenwand durch die Seitenwand verbunden sind. Vorzugsweise erstrecken sich die besagten Wände von der Einlassöffnung in Fliessrichtung des Wassers. Die besagten Wände bilden einen Innenraum, wobei die Auslassöffnung sich durch die Bodenwand erstreckt und wobei die Herstellöffnung sich durch die Deckenwand erstreckt.

Von der Einlassöffnung her gesehen erstrecken sich die Wände bevorzugt so, dass der Querschnitt des Innenraums in Fliessrichtung des Wassers gesehen von der Einlassöffnung nicht grösser wird als der Querschnitt der Einlassöffnung.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Einlaufgehäuses gemäss einer Ausführungsform mit eingesetztem Deckel;
- Fig. 2: das Einlaufgehäuse nach der Figur 1 mit abgesetztem Deckel;

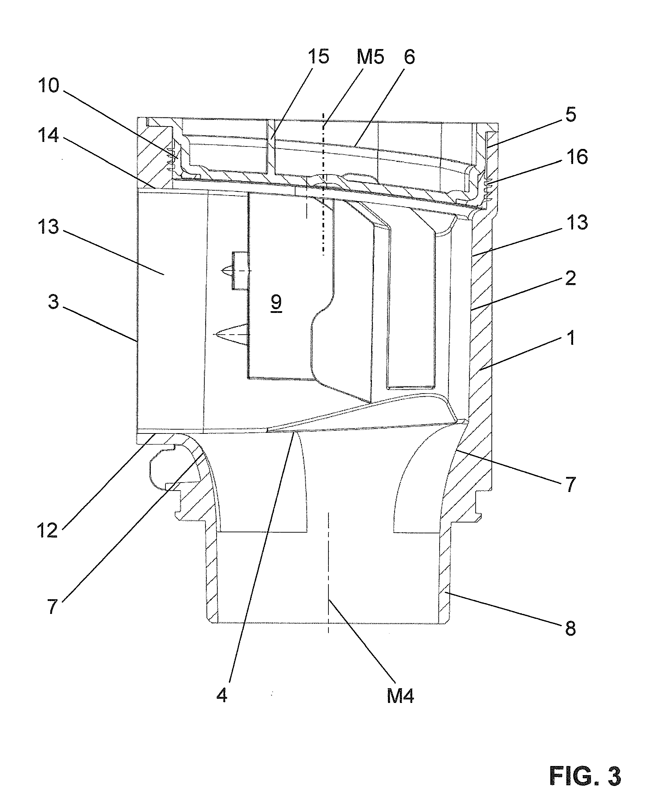

- Fig. 3: eine Schnittdarstellung durch das Einlaufgehäuse nach Figur 1 mit eingesetztem Deckel; und
- Fig. 4: eine Schnittdarstellung durch das Einlaufgehäuse nach Figur 1 mit abgesetztem Deckel.

### BESCHREIBUNG BEVORZUGTER AUSFÜHRUNGSFORMEN

In den Figuren wird eine Ausführungsform eines Einlaufgehäuses 1 für einen Bodenablauf einer sanitären Installation gezeigt. Das Einlaufgehäuse 1 schliesst sich im eingebauten Zustand an eine Bodenfläche an und sammelt das von der Bodenfläche zugeführte Wasser und leitet das Wasser einem Ablaufrohr zu. Die sanitäre Installation ist beispielsweise eine Dusche. Somit dient also das Einlaufgehäuse 1 der Entwässerung einer sanitären Einrichtung, wobei das wegzuführende Wasser durch das Einlaufgehäuse 1 einer Abflussleitung zugeführt wird.

Das Einlaufgehäuse 1 umfasst eine Wandung 2, die einen Innenraum 9 begrenzt, eine Einlassöffnung 3 und eine Auslassöffnung 4. Der Innenraum 9 ist über die Einlassöffnung 3 und die Auslassöffnung 4 zugänglich. Das Wasser fliesst von der sanitären Einrichtung kommend über die Einlassöffnung 3 in den Innenraum 9 des Einlaufgehäuses 1 ein und verlässt dieses über die Auslassöffnung 4. Das Einlaufgehäuse 1 ist hier aus Kunststoff. Die Einlassöffnung 3 erstreckt sich dabei vollständig über eine Seite des Innenraums 9. Von der Einlassöffnung 3 gesehen wird der Innenraum bezüglich der lichten Weite der Einlassöffnung 3 nicht grösser.

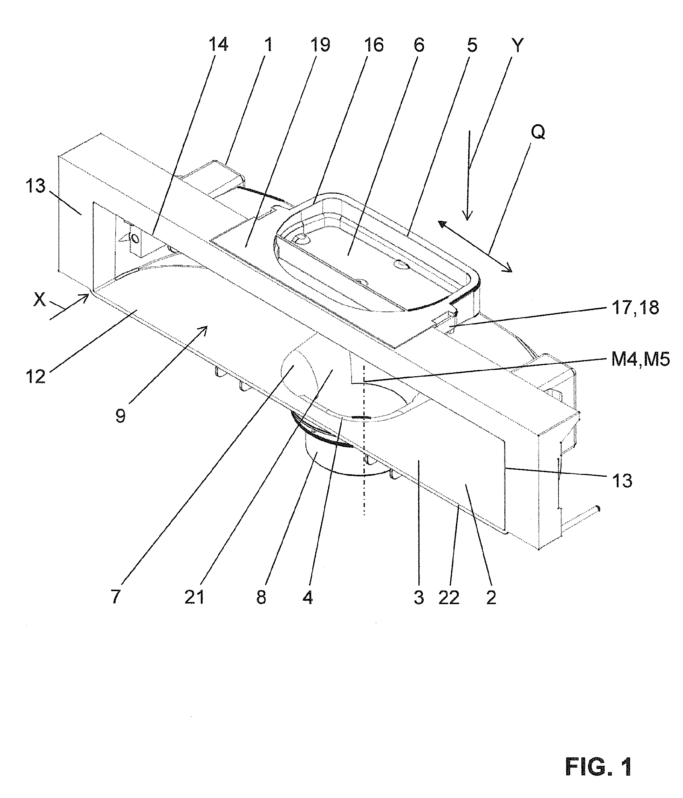

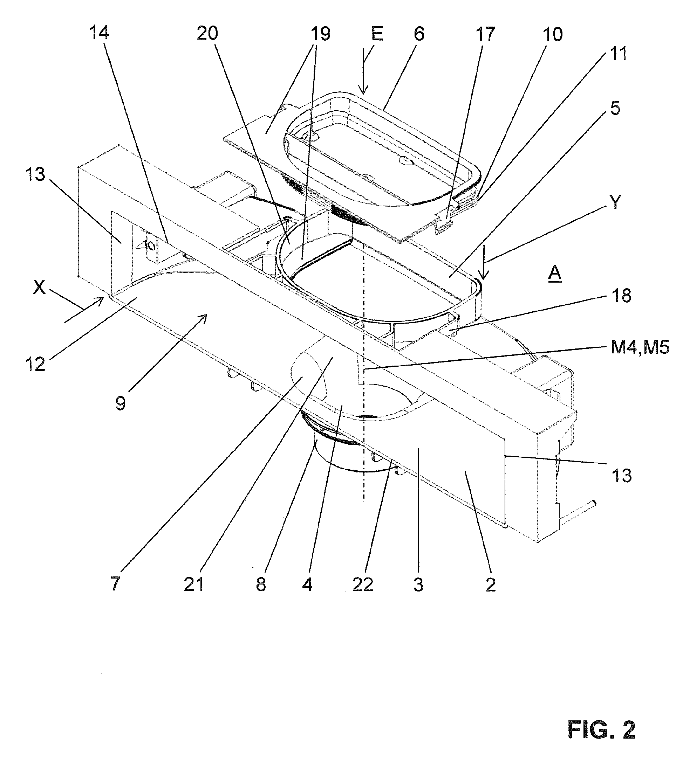

Das Einlaufgehäuse 1 weist bezüglich des Innenraumes 9 gegenüber der Auslassöffnung 4 weiter eine Herstellöffnung 5 auf. In der Figur 1 ist die Herstellöffnung 5 mit einem Deckel 6 verschlossen. In der Figur 2 wird die Herstellöffnung 5 mit abgesetztem Deckel 6 gezeigt. Der Deckel 6 ist nicht zwingend. Das Einlaufgehäuse 1 kann auch ohne dem Deckel 6 eingesetzt sein.

Die Herstellöffnung 5 dient im Wesentlichen als Mittel zur Herstellung der Auslassöffnung 4, welche einen strömungsoptimierten Querschnitt aufweist. Insbesondere der Eintrittsbereich 7, in welchem das Wasser von der Wandung 2 zur Auslassöffnung 4 geführt wird, ist dabei strömungsoptimiert ausgebildet. Der strömungsoptimierte Querschnitt ist in der vorliegenden Ausführungsform durch gerundete Kanten der Auslassöffnung 4 bereitgestellt. Für diese strömungsoptimierte Ausbildung verengt sich der Eintrittsbereich 7 bzw. die Auslassöffnung 4 vom Innenraum 9 her gesehen mit zunehmendem Abstand vom Innenraum 9. Aufgrund dieser Art der Verengung ist es daher nur möglich, die Auslassöffnung 4 von Seiten des Innenraums 9 wirtschaftlich zu Formen. Von ausserhalb des Innenraums 9, also durch die Auslassöffnung 4 hindurch in den Innenraum 9, wäre die Bildung einer strömungsoptimierter Auslassöffnung unmöglich, weil das Werkzeug nicht entformbar ist. Das Werkzeug für die Formung der strömungsoptieren Auslassöffnung 4 könnte nicht durch dieselbe aus dem Innenraum 9 herausgezogen werden. Für die Formung der strömungsoptimierten Auslassöffnung 4 mit der dazugehörigen Entformung des Werkzeuges dient die Herstellöffnung 5, durch welche ein Kern oder ein Schieber eines Spritzgusswerkzeuges durch den Innenraum 9 hindurch zur Auslassöffnung 4 geführt werden kann.

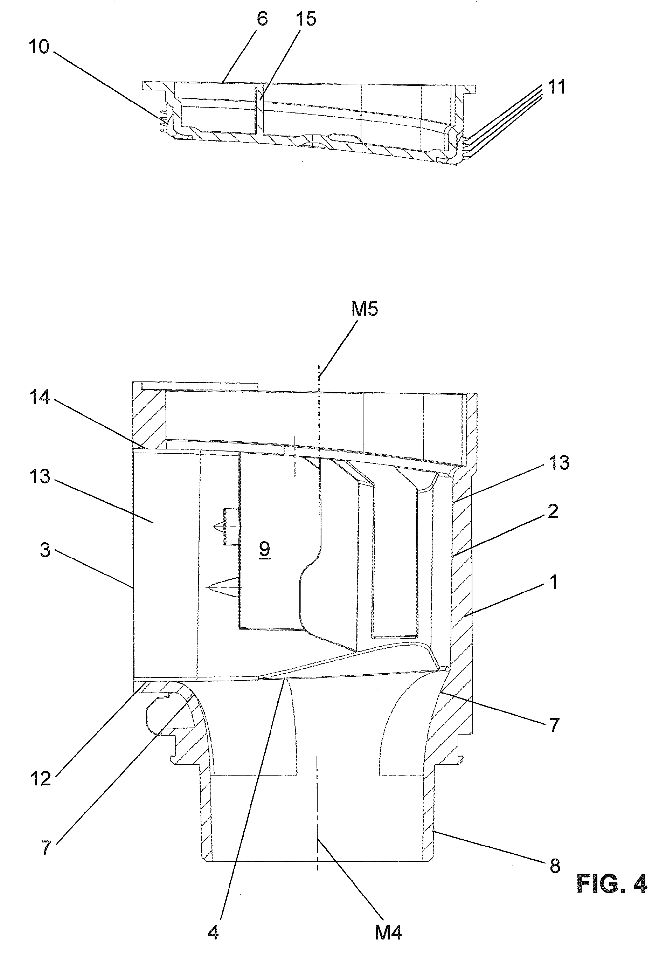

In der Figur 4 wird eine bevorzugte Ausdehnung der strömungsoptimierten Auslassöffnung 4 gezeigt. Der strömungsoptimierte Querschnitt der Auslassöffnung 4 erstreckt sich im Bereich der Seitenwand 13 gegenüber der Einlassöffnung 3 bis hin zur Seitenwand 13. Im Bereich der Einlassöffnung 3 erstreckt sich der strömungsoptimierte Querschnitt der Auslassöffnung 4 fast bis zur Einlassöffnung 3. Durch die Herstellöffnung 5 kann also auch die Dimension des strömungsoptimierten Bereichs der Auslassöffnung 4 bezüglich der Grösse des Einlaufgehäuses 3 optimiert werden.

Weiter kann die Herstellöffnung 5 als Revisionsöffnung dienen, wobei, wenn sich das Einlaufgehäuse 1 im eingebauten Zustand befindet, über die Einlassöffnung 3 und den Innenraum 9 Zugang zu den Bereichen oberhalb des Innenraums 9 geschaffen werden kann.

Die Herstellöffnung 5 ist bezüglich des Innenraums 9 gegenüber der Auslassöffnung 4 angeordnet. Mit anderen Worten gesagt liegt die Herstellöffnung 5 entlang einer sich durch die Auslassöffnung 4 erstreckenden Mittelachse M4, welche sich auch durch den Innenraum 9 hindurch erstreckt, in einer Wandung 2, welche durch die Mittelachse M4 durchdrungen wird. Die Mittelachse M4 verläuft durch die Schwerpunktslinie der Auslassöffnung 4. In der vorliegenden Ausführungsform verläuft die Mittelachse M4 zudem rechtwinklig zu der Wandung 2, in welcher die Auslassöffnung 4 liegt.

Die Wandung 2 umfasst hier eine Bodenwand 12 und eine Deckenwand 14. In den in der Figur gezeigten Ausführungsform ist die Auslassöffnung 4 in der Bodenwand 12 angeordnet und die Herstellöffnung 5 ist gegenüber der Auslassöffnung 4 in der Deckenwand 14 angeordnet. Die Bodenwand 12 und die Deckenwand 14 sind durch den Innenraum 9 getrennt und beabstandet zueinander angeordnet.

Der Querschnitt der Herstellöffnung 5 ist vorzugsweise mindestens gleich gross, insbesondere grösser als der maximale Querschnitt der Auslassöffnung 4. Der maximale Querschnitt der Auslassöffnung 4 liegt hier im Bereich der Bodenwand 12.

Die Herstellöffnung 5 und die Auslassöffnung 4 liegen bezüglich einer Richtung entlang der Mittelachse M4 gesehen so übereinander, dass die Auslassöffnung 4 entlang der Richtung der Mittelachse M4 durch die Herstellöffnung 5 vollständig zugänglich ist. Gleiches könnte auch bezüglich der Mittelachse M5 der Herstellöffnung 5 gesagt werden. Besonders bevorzugt erstreckt sich die Herstellöffnung 5 quer zur Mittelachse M4 der Auslassöffnung 4 über den maximalen Querschnitt der Auslassöffnung 4 hinaus. Diese Querrichtung wird symbolisch durch den Pfeil Q in der Figur 1 gezeigt. Die Herstellöffnung 5 weist somit einen grösseren Querschnitt auf als der maximale Querschnitt der Auslassöffnung 4. Folglich ist die Auslassöffnung 4 in Richtung der Mittelachse M4 oder M5 von oben her durch die Herstellöffnung 5 gesehen grösser als die Auslassöffnung 4.

Der Auslassöffnung 4 schliesst sich vorzugsweise ein Auslassstutzen 8 an. Der Auslassstutzen 8 ist dabei dem Einlaufgehäuse 1 angeformt. Der Eintrittsbereich 7 der Auslassöffnung 4 von der Wandung des Innenraums 9 in den Auslassstutzen 8 ist vorzugsweise gerundet ausgebildet, so wie dies in den Figuren dargestellt ist. Hierdurch wird der strömungsoptimierte Querschnitt bereitgestellt. Der Querschnitt der Auslassöffnung 4 verkleinert sich mit zunehmender Entfernung zum Innenraum 9 auf den Durchmesser des Auslassstutzens 8. Der Auslassstutzen 8 ist vorzugsweise kreisrund ausgebildet. Der grösste Querschnitt der Auslassöffnung 4 kann aber auch eine andere Form aufweisen, wobei diese andere Form auf den kreisrunden Querschnitt des Auslassstutzens 8 übergeht. Am Auslassstutzen 8 ist ein Abflussrohr oder ein Siphon anschliessbar. Der Auslassstutzen 8 ist rohrförmig ausgebildet.

Die Herstellöffnung 5 ist vorteilhafterweise derart am Einlaufgehäuse 1 angeordnet, dass diese in eingebauten Zustand nicht von Wasser überströmt wird. Die Herstellöffnung 5 liegt also oberhalb von der Auslassöffnung 4.

Wie bereits oben erwähnt sind bezüglich des Deckels 6 zwei unterschiedliche Ausführungsformen denkbar.

In einer ersten Ausführungsform umfasst das Einlaufgehäuse 1 einen Deckel 6, mit welchen die Herstellöffnung 5 verschliessbar ist.

In einer zweiten Ausführungsform umfasst das Einlaufgehäuse 1 keinen Deckel. Auf den Deckel 6 kann dann verzichtet werden, wenn die Herstellöffnung 5 in Einbaulage nicht mit Wasser überströmt wird.

Gemäss einer Variante der ersten Ausführungsform wird der Deckel 6 vorzugsweise von ausserhalb des Innenraums 9 in die Herstellöffnung 5 eingesetzt. Dies wird in der Figur 2 entsprechend dargestellt. Der Deckel 6 kann entlang einer Einschubbewegung, die mit dem Pfeil E dargestellt ist, in die Herstellöffnung 5 eingesetzt werden. Der Deckel 6 verschliesst somit die Herstellöffnung 5. In einer alternativen Variante der ersten Ausführungsform kann der Deckel 6 auch von innerhalb des Innenraums 9 in die Herstellöffnung 3 eingesetzt werden. Die Einschubrichtung wäre dann um 180° entgegen des Pfeils E. Die alternative Variante ist für die Revisionsarbeiten vorteilhaft, weil im eingebauten Zustand ein Zugang durch den Innenraum 9 zu dem Einbauraum mit dem Bezugszeichen A in der Figur 2 geschaffen werden kann.

Auch kann die Herstellöffnung 5 für eine Dichtigkeitsprüfung eingesetzt werden, welche von oben erfolgen kann.

Wie in der Figur 2 gezeigt, umfasst der Deckel 6 vorzugsweise mindestens ein Dichtungselement 10. Das Dichtungselement 10 dichtet dabei den Spalt 16 zwischen dem Deckel 5 und der Herstellöffnung 5 ab. Das Dichtungselement 10 weist vorzugsweise mindestens eine Dichtungslippe 11 auf. Hier sind mehrere Dichtungslippen 11 in einem Abstand entlang der Einschubrichtung E angeordnet. Diese Dichtungslippen 11 sind dabei vollständig umlaufend um den Deckel 6 ausgebildet und weisen im Wesentlichen eine identische Form auf. Das Dichtungselement 10 kann aber auch die Form eines O-Rings oder einer anderen Dichtung aufweisen.

Der Deckel 6 ist formschlüssig und/oder kraftschlüssig in der Herstellöffnung 5 gehalten. Nicht aber ist der Deckel stoffschlüssig in der Herstellöffnung 5 gehalten. Der Deckel 6, wenn er in der bevorzugten Ausführungsvariante vorhanden ist, wird also ausschliesslich formschlüssig und/oder kraftschlüssig in der Herstellöffnung 5 gehalten. Eine einstückige Form mit dem Einlaufgehäuse 1 ist nicht vorgesehen. Es handelt sich also beim Deckel 6 und beim Einlaufgehäuse 1 um zwei separat voneinander ausgebildete Teile.

Der Deckel 6 weist einen Griff 15 auf. Über diesen Griff 15 kann der Benutzer den Deckel ergreifen und einsetzen bzw. entfernen.

Der Deckel 6 und das Einlaufgehäuse 1 verfügen weiter über Rastmittel 17, 18, über welche der Deckel 6 am Einlaufgehäuse 1 befestigbar ist. Die Rastmittel 17, 18 weisen hier die Gestalt einer Rastlasche 17 und einer der Rastlasche 17 korrespondierend ausgebildeten Rastmulde 18 auf. Die Rastlasche 17 ist hier dem Deckel 6 und die Rastmulde 18 ist dem Einlaufgehäuse angeformt.

Vorzugsweise weisen entweder der Deckel 6 und das Einlaufgehäuse 1 oder sowohl der Deckel 6 und das Einlaufgehäuse 1 Anschlagsmittel 19 auf, welche ein relatives positionieren zwischen Deckel 6 und Einlaufgehäuse 1 erlauben. Die Anschlagsmittel 19 haben vorzugsweise die Gestalt eines Randes am Deckel 6 und am Einlaufgehäuse 1. In der Figur 2 kann weiterhin gut erkannt werden, dass die Herstellöffnung 5 durch eine umlaufende Seitenwand 20 begrenzt bzw. umgeben wird. Die Auslassöffnung 4 wird durch eine Seitenwand 21 begrenzt bzw. umgeben. Die Mittelachse M4 der Auslassöffnung 4 und auch die Mittelachse M5 der Herstellöffnung 5 erstrecken sich jeweils parallel zur entsprechenden Seitenwand 20, 21.

Wie bereits erläutert, wird die Wandung 2 durch eine Bodenwand 12 und eine Deckenwand 14 bereitgestellt. In der vorliegenden Ausführungsform weist die Wandung zudem noch Seitenwände 13 auf. Die Wände 12, 13, 14 erstrecken sich in Fliessrichtung F gesehen von der Einlassöffnung 3 und bilden den besagten Innenraum 9. Die Auslassöffnung 4 erstreckt sich durch die Bodenwand 12. Vorzugsweise erstrecken sich die Bodenwand 12 und Deckenwand 14 im Wesentlichen parallel zueinander, wobei die Seitenwand 13 die Bodenwand 12 und die Deckenwand 14 verbindet.

Die Bodenwand 12 und/oder die Deckenwand 14 sind in einer anderen bevorzugten Ausbildung von der Einlassöffnung 3 gesehen gekrümmt ausgebildet. Dabei nimmt die Distanz zwischen Bodenwand 12 und Deckenwand 14 mit zunehmender Entfernung von der Einlassöffnung 3 ab. Die Distanz wird also kleiner. Der Innenraum 9 verkleinert sich also von der Einlassöffnung 3 bis zum rückwärtigen Bereich. Bezüglich der Bodenwand 12 ist noch anzumerken, dass die Auslassöffnung 4 immer am tiefsten Punkt im eingebauten Zustand liegt, so dass das Wasser der Auslassöffnung 4 gut zugeführt werden kann.

Die Vorderkanten 22 der Einlassöffnung 3 spannen eine Ebene auf. In dieser Ebene weist die Einlassöffnung 3 einen maximalen Querschnitt auf. In eine Richtung rechtwinklig auf diese Ebene gesehen vergrössert sich der Innenraum 9 Quer zur besagten Richtung nicht weiter, so dass über die Einlassöffnung 3 der Innenraum 9 mit einem Kern oder Schieber einer Spritzgiessmaschine geformt werden kann.

Das Einlaufgehäuse 1 wird vorzugsweise mit einem Spritzgiessverfahren hergestellt. Hierfür wird ein Spritzgiesswerkzeug eingesetzt. Das Spritzgiesswerkzeug umfasst vorzugsweise zwei verschiedene Kerne oder Schieber, mit welchen die Innenform des Einlaufgehäuses 1 geformt werden kann. Die Aussenform des Einlaufgehäuses wird mit einer entsprechenden Spritzgiessform bereitgestellt. Die Kerne können auch als Schieber bezeichnet werden.

Mit einem ersten Kern des Spritzgusswerkzeuges werden der Innenraum 9 und die Einlassöffnung 3 geformt. Dieser Kern wird entlang der Richtung X, welche in der Figur 2 gezeigt wird, bewegt. Mit einem zweiten Kern, welcher den ersten Kern durchdringt, wird die Herstellöffnung 5 und die Auslassöffnung 4 geformt. Der zweite Kern wird entlang der Richtung Y, welche rechtwinklig zu der Richtung X steht, bewegt. Der erste Kern wird durch den zweiten Kern durchdrungen und weist hierfür eine entsprechende Öffnung auf. Mit dem zweiten Kern wird die Herstellöffnung 5 und die Auslassöffnung 4 geformt. Durch die Anordnung der Herstellöffnung 5 entsteht somit der Vorteil, dass die Auslassöffnung 4 ebenfalls mit einem vergleichsweise einfach ausgebildeten Werkzeug bereitgestellt werden kann. Zudem wird durch den zweiten Kern die Möglichkeit geschaffen, dass die Auslassöffnung 4 einen strömungsoptimierten Querschnitt, insbesondere einen strömungsoptimierten Eintrittsbereich 7 aufweist.

In einer weiteren Ausführungsform kann das Einlaufgehäuse 1 mit einer nicht gezeigten Dichtfolie verbunden sein. Besonders bevorzugt wird das Einlaufgehäuse 1 an die Dichtfolie angespritzt. Die Dichtfolie erstreckt sich dabei mindestens im Bereich der Bodenwand 12 in den Innenraum 9 hinein, wobei die Dichtfolie vorzugsweise mit der Bodenwand 12 im Bereich der Vorderkante 22 mit dem Einlaufgehäuse 1 in Verbindung steht. Weiter kann die Dichtfolie aber auch mit den Seitenwänden 13 und der Deckenwand 14 in Verbindung stehen. Zusätzlich kann die Dichtfolie auch ausserhalb des Innenraums 9 am Einlaufgehäuse 1 angeformt sein. Die Dichtfolie selbst wird beim Herstellprozess durch den besagten ersten Kern durchdrungen. Der Kern formt zugleich abschnittsweise die Teile der Dichtfolie, welche dann in den Innenraum 9 einragen sollen und mit dem Wänden 12 und/oder 13 und/oder 14 verbunden wird.

Durch die Herstellöffnung kann bei der Fertigung des Einlaufgehäuses 1 auf den Einsatz von Faltkernen verzichtet werden, wodurch sowohl der strömungsoptimierte Querschnitt, als auch die Dichtfolie hergestellt werden können.

### BEZUGSZEICHENLISTE

- 1: Einlaufgehäuse
- 2: Wandung
- 3: Einlassöffnung
- 4: Auslassöffnung
- 5: Herstellöffnung
- 6: Deckel
- 7: Eintrittsbereich
- 8: Auslassstutzen
- 9: Innenraum
- 10: Dichtungselement
- 11: Dichtungslippe
- 12: Bodenwand
- 13: Seitenwand
- 14: Deckenwand
- 15: Griff
- 16: Spalt
- 17: Rastmittel
- 18: Rastmittel
- 19: Anschlagsmittel
- 20: Seitenwand
- 21: Seitenwand
- 22: Vorderkanten
- M4: Mittelachse
- M5: Mittelachse
- E: Einschubrichtung
- X, Y: Richtung des Werkzeuges
- A: Einbauraum
- Q: Querrichtung

## Patentansprüche

1. Spritzgiessverfahren zur Herstellung eines Einlaufgehäuses (1) für einen Bodenablauf einer sanitären Installation, umfassend eine Wandung (2), die einen Innenraum (9) begrenzt, eine Einlassöffnung (3) und eine Auslassöffnung (4), wobei das Einlaufgehäuse (1) im Wesentlichen aus Kunststoff ist, und wobei der Innenraum (9) durch die Einlassöffnung (3) und die Auslassöffnung (4) zugänglich ist und das abzuführende Wasser von der Einlassöffnung (3) zur Auslassöffnung (4) durch den Innenraum (9) führbar ist, wobei das Einlaufgehäuse (1) bezüglich des Innenraums (9) gegenüber der Auslassöffnung (4) eine Herstellöffnung (5) aufweist, und dass die Auslassöffnung (4) einen strömungsoptimierten Querschnitt, insbesondere einen strömungsoptimierten Eintrittsbereich (7), aufweist, **dadurch gekennzeichnet, dass** mit einem ersten Kern eines Spritzgiesswerkzeuges der Innenraum (9) und die Einlassöffnung (3) geformt wird und dass mit einem zweiten Kern, welcher den ersten Kern durchdringt, die Herstellöffnung (5) und die Auslassöffnung (4) geformt wird.

2. Verfahren nach Anspruch 1, **dadurch gekennzeichnet, dass** das Einlaufgehäuse (1) weiter einen Deckel (6) umfasst, mit welchem die Herstellöffnung (5) verschlossen wird.

3. Einlaufgehäuse (1) hergestellt nach dem Verfahren von Anspruch 1 oder 2, **dadurch gekennzeichnet, dass** sich der Auslassöffnung (4) ein Auslassstutzen (8) anschliesst, wobei der Eintrittsbereich (7) der Auslassöffnung (4) von der Wandung des Innenraums (9) in den Auslassstutzen (8) strömungsoptimiert gerundet ausgebildet ist, und dass sich der Querschnitt der Auslassöffnung (4) mit zunehmender Entfernung zum Innenraum (9) auf den Durchmesser des Auslassstutzens (8) verkleinert.

4. Einlaufgehäuse (1) nach Anspruch 3, **dadurch gekennzeichnet, dass** das Einlaufgehäuse (1) weiter einen Deckel (6) umfasst, mit welchem die Herstellöffnung (5) verschliessbar ist und/oder dass das Einlaufgehäuse (1) einteilig ausgebildet ist, wobei der ggf. vorhandene Deckel (6) ein zusätzliches Teil zum einteiligen Einlaufgehäuse (1) ist.

5. Einlaufgehäuse (1) nach einem der vorhergehenden Ansprüche 3 bis 4, **dadurch gekennzeichnet, dass** der Querschnitt der Herstellöffnung (5) mindestens gleich gross, insbesondere grösser, als der maximale Querschnitt der Auslassöffnung (4) ist und/oder dass sich die Herstellöffnung (5) in Querrichtung (Q) zur Mittelachse (M4) der Auslassöffnung (4) über den maximalen Querschnitt der Auslassöffnung (4) erstreckt.

6. Einlaufgehäuse (1) nach einem der vorhergehenden Ansprüche 3 bis 5, **dadurch gekennzeichnet, dass** die Mittelachse (M4) der Auslassöffnung (4) kollinear oder parallel versetzt zur Mittelachse (M5) der Herstellöffnung (5) verläuft.

7. Einlaufgehäuse (1) nach einem der vorhergehenden Ansprüche 3 bis 6, **dadurch gekennzeichnet, dass** sich der strömungsoptimierte Bereich der Auslassöffnung (4) im Bereich der Seitenwand (13) gegenüber der Einlassöffnung (3) bis hin zur Seitenwand (13) erstreckt und/oder dass sich der strömungsoptimierte Bereich der Auslassöffnung fast oder im Wesentlichen bis zur Einlassöffnung (3) erstreckt.

8. Einlaufgehäuse nach einem der vorhergehenden Ansprüche 3 bis 7, **dadurch gekennzeichnet, dass** der Deckel (6) von ausserhalb des Innenraums (9) in die Herstellöffnung (5) einsetzbar ist, oder dass der Deckel (6) von innerhalb des Innenraums (9) in die Herstellöffnung (5) einsetzbar ist.

9. Einlaufgehäuse nach einem der vorhergehenden Ansprüche 3 bis 8, **dadurch gekennzeichnet, dass** der Deckel (6) und/oder die Herstellöffnung (5) mit mindestens einem Dichtungselement (10) versehen sind, welche den Spalt zwischen dem Deckel (6) und der Herstellöffnung (5) abdichten, wobei das Dichtungselement (10) vorzugsweise mindestens eine Dichtungslippe (11) aufweist.

10. Einlaufgehäuse nach einem der vorhergehenden Ansprüche 3 bis 9, **dadurch gekennzeichnet, dass** der Deckel (6) formschlüssig und/oder kraftschlüssig, nicht aber stoffschlüssig in der Herstellöffnung (5) gehalten wird.

11. Einlaufgehäuse nach einem der vorhergehenden Ansprüche 3 bis 10, **dadurch gekennzeichnet, dass** der Deckel (6) und das Einlaufgehäuse (1) über Rastmittel (17, 18) verfügen, über welche der Deckel (6) am Einlaufgehäuse (1) befestigt ist.

12. Einlaufgehäuse nach einem der vorhergehenden Ansprüche 3 bis 11, **dadurch gekennzeichnet, dass** der Deckel (6) einen oder eine Griffmulde (15) aufweist.

13. Einlaufgehäuse nach einem der vorhergehenden Ansprüche 3 bis 12, **dadurch gekennzeichnet, dass** die Wandung (2) durch eine Bodenwand (12), durch Seitenwände (13) und durch eine Deckenwand (14) bereitgestellt wird, wobei die Bodenwand (12) und die Deckenwand (14) durch die Seitenwand (13) verbunden sind, und wobei die besagten Wände sich von der Einlassöffnung (3) in Fliessrichtung des Wassers erstrecken und einen Innenraum (9) bilden, wobei die Auslassöffnung (4) sich durch die Bodenwand (12) erstreckt und wobei die Herstellöffnung (5) sich durch die Deckenwand (14) erstreckt.

14. Einlaufgehäuse nach einem der vorhergehenden Ansprüche 3 bis 13, **dadurch gekennzeichnet, dass** die Bodenwand (12) und/oder die Deckenwand (14) (13) von der Einlassöffnung (3) gekrümmt ausgebildet ist, wobei sich die Distanz zwischen Bodenwand (12) und Seitenwand (13) mit zunehmender Entfernung von der Einlassöffnung (3) kleiner wird.

## Claims

1. Injection moulding process for manufacturing an inlet housing (1) for a floor drain of a sanitary installation, comprising a wall (2) which defines an inner chamber (9), an inlet opening (3) and an outlet opening (4) wherein the inlet housing (1) is made substantially of plastic and wherein the inner chamber (9) is accessible through the inlet opening (3) and the outlet opening (4), and the water which is to be drained can be conveyed from the inlet opening (3) to the outlet opening (4) through the inner chamber (9), wherein the inlet housing (1) has in relation to the inner chamber (9) a production opening (5) opposite the outlet opening (4), and that the outlet opening (4) has an optimized flow cross-section, more particularly an optimized flow inlet region (7), **characterized in that** the inner chamber (9) and the inlet opening (3) are formed with a first core of an injection moulding tool, and that the production opening (5) and the outlet opening (4) are formed with a second core which passes through the first core.

2. Method according to Claim 1 **characterized in that** the inlet housing (1) further comprises a cover (6) with which the production opening (5) is closed.

3. Inlet housing (1) manufactured according to the method of Claim 1 or 2 **characterized in that** the outlet opening (4) is adjoined by an outlet pipe (8) wherein the inlet region (7) of the outlet opening (4) from the wall of the inner chamber (9) into the outlet pipe (8) has a rounded configuration for optimized flow, and that the cross-section of the outlet opening (4) narrows to the diameter of the outlet pipe (8) with increasing distance from the inner chamber (9).

4. Inlet housing (1) according to Claim 3 **characterized in that** the inlet housing (1) furthermore comprises a cover (6) with which the production opening (5) can be closed and/or that the inlet housing (1) is formed in one piece wherein the cover (6) which may be present is an additional part to the one-piece inlet housing (1).

5. Inlet housing (1) according to one of the preceding Claims 3 to 4 **characterized in that** the cross-section of the production opening (5) is at least as large, more particularly larger, than the maximum cross-section of the outlet opening (4) and/or that the production opening (5) extends over the maximum cross-section of the outlet opening (4) in the transverse direction (Q) to the centre axis (M4) of the outlet opening (4).

6. Inlet housing (1) according to one of the preceding Claims 3 to 5 **characterized in that** the centre axis (M4) of the outlet opening (4) runs co-linearly or parallel off-set to the centre axis (M5) of the production opening (5).

7. Inlet housing (1) according to one of the preceding Claims 3 to 6 **characterized in that** the optimized flow region of the outlet opening (4) extends in the region of the side wall (13) opposite the inlet opening (3) up to the side wall (13) and/or that the optimized flow region of the outlet opening extends practically or substantially up to the inlet opening (3).

8. Inlet housing according to one of the preceding Claims 3 to 7 **characterized in that** the cover (6) can be inserted into the production opening (5) from outside of the inner chamber (9), or that the cover (6) can be inserted into the production opening (5) from inside the inner chamber (9).

9. Inlet housing according to one of the preceding Claims 3 to 8 **characterized in that** the cover (6) and/or the production opening (5) are provided with at least one sealing element (10) which seal(s) the gap between the cover (6) and the production opening (5), wherein the sealing element (10) preferably has at least one sealing lip (11).

10. Inlet housing according to one of the preceding Claims 3 to 9 **characterized in that** the cover (6) is held with form-fitting and/or force-fitting engagement, but not however material-bonding connection, in the production opening (5).

11. Inlet housing according to one of the preceding Claims 3 to 10 **characterized in that** the cover (6) and the inlet housing (1) have detent-locking means (17, 18) via which the cover (6) is fixed on the inlet housing (1).

12. Inlet housing according to one of the preceding Claims 3 to 11 **characterized in that** the cover (6) has one or a grip recess (15).

13. Inlet housing according to one of the preceding Claims 3 to 12 **characterized in that** the wall (2) is set up by a base wall (12), by side walls (13) and by a top wall (14) wherein the base wall (12) and the top wall (14) are connected by the side wall (13), and wherein the said walls extend from the inlet opening (3) in the flow direction of the water and form an inner chamber (9), wherein the outlet opening (4) extends through the base wall (12) and wherein the production opening (5) extends through the top wall (14).

14. Inlet housing according to one of the preceding Claims 3 to 13 **characterized in that** the base wall (12) and/or the top wall (14) have a curved configuration from the inlet opening (3) wherein the distance between the base wall (12) and side wall (13) becomes smaller with increasing distance from the inlet opening (3).

## Revendications

1. Procédé de moulage par injection pour la fabrication pour un boîtier d'entrée (1) pour un siphon de sol d'une installation sanitaire, comprenant une paroi (2) qui délimite un espace intérieur (9), une ouverture d'entrée (3) et une ouverture de sortie (4), où le boîtier d'entrée (1) est essentiellement en matière plastique, et où l'espace intérieur (9) est accessible à travers l'ouverture d'entrée (3) et l'ouverture de sortie (4), et l'eau destinée à être éliminée peut être guidée à travers l'espace intérieur (9) depuis l'ouverture d'entrée (3) vers l'ouverture de sortie (4), où le boîtier d'entrée (1) présente, par rapport à l'espace intérieur (9), une ouverture de fabrication (5) opposée à l'ouverture de sortie (4), et que l'ouverture de sortie (4) présente une section transversale optimisée pour l'écoulement, en particulier un domaine d'entrée (7) optimisé pour l'écoulement, **caractérisé en ce que** l'espace intérieur (9) et l'ouverture d'entrée (3) sont formés au moyen d'un premier noyau d'un outil de moulage par injection et que l'ouverture de fabrication (5) et l'ouverture de sortie (4) sont formées au moyen d'un deuxième noyau traversant le premier noyau.

2. Procédé selon la revendication 1, **caractérisé en ce que** le boîtier d'entrée (1) comprend d'avantage un couvercle (6), au moyen duquel l'ouverture de fabrication (5) est fermée.

3. Boîtier d'entrée (1) fabriqué selon le procédé de la revendication 1 ou 2, **caractérisé en ce que** une tubulure de sortie (8) se connecte à l'ouverture de sortie (4), où le domaine d'entrée (7) de l'ouverture de sortie (4) est formé de manière optimisée pour l'écoulement et de manière arrondie depuis la paroi de l'espace intérieur (9) dans la tubulure de sortie (8), et que la coupe transversale de l'ouverture de sortie (4) diminue à distance augmentante de l'espace intérieur (9) jusqu'au diamètre de la tubulure de sortie (8).

4. Boîtier d'entrée (1) selon la revendication 3, **caractérisé en ce que** le boîtier d'entrée (1) comprend d'avantage un couvercle (6), avec lequel l'ouverture de fabrication (5) peut être fermée et/ou que le boîtier d'entrée (1) est formé en une pièce, où éventuellement le couvercle (6),si présent, est une pièce supplémentaire au boitier d'entrée (1) en une pièce.

5. Boîtier d'entrée (1) selon une des revendications précédentes 3 à 4, **caractérisé en ce que** la coupe transversale de l'ouverture de fabrication (5) est au moins aussi importante, en particulier plus importante, que la section transversale maximale de l'ouverture de sortie (4) et/ou que l'ouverture de fabrication (5) s'étend au-delà de la section transversale maximale de l'ouverture de sortie (4) en direction perpendiculaire (Q) à l'axe central (M4) de l'ouverture de sortie (4).

6. Boîtier d'entrée (1) selon une des revendications précédentes 3 à 5, **caractérisé en ce que** l'axe central (M4) de l'ouverture de sortie (4) s'étend de manière colinéaire, ou décalée en parallèle, par rapport à l'axe centrale (M5) de l'ouverture de fabrication (5).

7. Boîtier d'entrée (1) selon une des revendications précédentes 3 à 6, **caractérisé en ce que** le domaine optimisé pour l'écoulement de l'ouverture de sortie (4) s'étend depuis le domaine de la paroi latérale (13) opposé à l'ouverture d'entrée (3) jusqu'à la paroi latérale (13) et/ou que le domaine optimisé pour l'écoulement de l'ouverture de sortie s'étend presque jusqu'à, ou essentiellement jusqu'à, l'ouverture d'entrée (3).

8. Boîtier d'entrée (1) selon une des revendications précédentes 3 à 7, **caractérisé en ce que** le couvercle (6) peut être inséré depuis l'extérieur de l'espace intérieur (9) dans l'ouverture de fabrication (5), ou que le couvercle (6) peut être inséré depuis l'intérieur de l'espace intérieur (9) dans l'ouverture de fabrication (5).

9. Boîtier d'entrée (1) selon une des revendications précédentes 3 à 8, **caractérisé en ce que** le couvercle (6) et/ou l'ouverture de fabrication (5) disposent d'au moins un élément d'étanchéité (10), lequel étanchéifie la fente entre le couvercle (6) et l'ouverture de fabrication (5), où l'élément d'étanchéité (10) présente préférablement au moins une lèvre d'étanchéité (11).

10. Boîtier d'entrée (1) selon une des revendications précédentes 3 à 9, **caractérisé en ce que** le couvercle (6) est retenu dans l'ouverture de fabrication (5) par assemblage de force et/ou de forme, mais non pas par liaison de matière.

11. Boîtier d'entrée (1) selon une des revendications précédentes 3 à 10, **caractérisé en ce que** le couvercle (6) et le boîtier d'entrée (1) disposent de moyens d' encastrement (17,18) à travers lesquels le couvercle (6) est fixé au boîtier d'entrée (1).

12. Boîtier d'entrée (1) selon une des revendications précédentes 3 à 11, **caractérise en ce que** le couvercle (6) présente un ou plusieurs auges de préhension (15).

13. Boîtier d'entrée (1) selon une des revendications précédentes 3 à 12, **caractérise en ce que** la paroi (2) est fournie par une paroi de fond (12), par des parois latérales (13) et par une paroi supérieure (14), où la paroi de fond (12) et la paroi supérieure (14) sont connectées à travers la paroi latérale (13), et où lesdites parois s'étendent depuis l'ouverture d'entrée (3) en direction de l'écoulement de l'eau et forment une espace intérieur (9), ou l'ouverture de sortie (4) s'étend à travers la paroi de fond (12) et où l'ouverture de fabrication (5) s'étend à travers la paroi supérieure (14).

14. Boîtier d'entrée (1) selon une des revendications précédentes 3 à 13, **caractérise en ce que** la paroi de fond (12) et/ou la paroi supérieure (14) sont formées de manière courbe depuis d'ouverture d'entrée (3), où la distance entre la paroi de fond (12) et la paroi latérale (13) diminue à distance augmentante de l'ouverture d'entrée (3).
